# EUROPÄISCHE PATENTANMELDUNG

(11) **EP 3 936 275 A1**
(43) Veröffentlichungstag der Anmeldung: **12.01.2022**
(21) Anmeldenummer: 20184277.0
(22) Anmeldetag: 06.07.2020
(51) Int. Cl.: B23K 26/08, B21B 15/00, B23K 26/242, B23K 26/28, B23K 26/38, B23K 26/60, B23K 101/16

(54) **BEARBEITUNGSVERFAHREN UND -ANLAGE ZUM SCHWEISSEN VON METALLBÄNDERN**

(71) Anmelder: Primetals Technologies Germany GmbH, 91058 Erlangen (DE)
(72) Erfinder: Hofbauer, Josef, 91058 Erlangen (DE)
(74) Vertreter: Metals@Linz

(57) **Zusammenfassung**

Eine Bearbeitungsanlage für Metallbänder weist eine Schweißmaschine, einen der Schweißmaschine nachgeordneten Bandspeicher und eine dem Bandspeicher nachgeordnete Bearbeitungseinrichtung auf. Mittels der Schweißmaschine werden die Metallbänder (1c, 1d) zu einem Endlosband geschweißt. Das Endlosband wird im Bandspeicher gespeichert und von dort an die Bearbeitungseinrichtung ausgegeben. Das Verbinden der Metallbänder (1c, 1d) erfolgt über Schweißnähte (14). Ein Winkel (α), den die Schweißnähte (14) mit der Transportrichtung (x) bilden, ist zumindest abschnittweise von 90° verschieden.

## Beschreibung

### Gebiet der Technik

Die vorliegende Erfindung geht aus von einem Bearbeitungsverfahren für Metallbänder,
- wobei einem Bandspeicher einer Bearbeitungsanlage für die Metallbänder intermittierend und sequenziell nacheinander in einer für die Metallbänder einheitlichen Transportrichtung jeweils ein Metallband zugeführt wird,
- wobei das jeweilige Metallband einen jeweiligen Bandkopf, einen jeweiligen Bandfuß sowie zwischen dem jeweiligen Bandkopf und dem jeweiligen Bandfuß ein jeweiliges Filetstück aufweist,
- wobei das jeweilige Metallband zuerst mit dem jeweiligen Bandkopf, sodann dem jeweiligen Filetstück und schließlich dem jeweiligen Bandfuß in den Bandspeicher einläuft,
- wobei der jeweilige Bandkopf eine jeweilige Vorderkante und der jeweilige Bandfuß eine jeweilige Hinterkante aufweist,
- wobei die jeweilige Vorderkante unmittelbar vor dem Zuführen des jeweiligen Metallbandes zum Bandspeicher mittels einer Schweißmaschine der Bearbeitungsanlage an die Hinterkante eines dem Bandspeicher jeweils unmittelbar zuvor teilweise zugeführten Metallbandes angeschweißt wird, so dass sich zwischen der Vorderkante des jeweiligen Metallbandes und der Hinterkante des jeweils unmittelbar zuvor teilweise zugeführten Metallbandes eine jeweilige Schweißnaht bildet,
- wobei die jeweilige Schweißnaht sich quer zur Transportrichtung gesehen von einer in Transportrichtung verlaufenden Seitenkante eines der beiden beteiligten Metallbänder zur anderen Seitenkante desselben Metallbandes oder zu einer Seitenkante des anderen Metallbandes erstreckt,
- wobei die im Bandspeicher gespeicherten Metallbänder einschließlich der die Metallbänder verbindenden Schweißnähte von dem Bandspeicher kontinuierlich oder intermittierend einer Bearbeitungseinrichtung der Bearbeitungsanlage zugeführt werden,
- wobei der Bearbeitungseinrichtung jeweils zunächst der Bandkopf, sodann das Filetstück und erst danach der Bandfuß des jeweiligen Metallbandes zugeführt werden.

Die vorliegende Erfindung geht weiterhin aus von einer Bearbeitungsanlage für Metallbänder,
- wobei die Bearbeitungsanlage einen Bandspeicher aufweist, dem intermittierend und sequenziell nacheinander in einer für die Metallbänder einheitlichen Transportrichtung jeweils ein Metallband zugeführt wird,
- wobei das jeweilige Metallband einen jeweiligen Bandkopf, einen jeweiligen Bandfuß sowie zwischen dem jeweiligen Bandkopf und dem jeweiligen Bandfuß ein jeweiliges Filetstück aufweist,
- wobei das jeweilige Metallband zuerst mit dem jeweiligen Bandkopf, sodann dem jeweiligen Filetstück und schließlich dem jeweiligen Bandfuß in den Bandspeicher einläuft,
- wobei der jeweilige Bandkopf eine jeweilige Vorderkante und der jeweilige Bandfuß eine jeweilige Hinterkante aufweist,
- wobei die Bearbeitungsanlage eine dem Bandspeicher vorgeordnete Schweißmaschine aufweist, mittels derer die Vorderkante des jeweiligen Metallbandes unmittelbar vor dem Zuführen des jeweiligen Metallbandes zum Bandspeicher an die Hinterkante eines dem Bandspeicher jeweils unmittelbar zuvor teilweise zugeführten Metallbandes angeschweißt wird, so dass sich zwischen der Vorderkante des jeweiligen Metallbandes und der Hinterkante des jeweils unmittelbar zuvor teilweise zugeführten Metallbandes eine jeweilige Schweißnaht bildet,
- wobei die jeweilige Schweißnaht sich quer zur Transportrichtung gesehen von einer in Transportrichtung verlaufenden Seitenkante eines der beiden beteiligten Metallbänder zur anderen Seitenkante desselben Metallbandes oder zu einer Seitenkante des anderen Metallbandes erstreckt,
- wobei die im Bandspeicher gespeicherten Metallbänder einschließlich der die Metallbänder verbindenden Schweißnähte von dem Bandspeicher kontinuierlich oder intermittierend einer Bearbeitungseinrichtung der Bearbeitungsanlage zugeführt werden,
- wobei der Bearbeitungseinrichtung jeweils zunächst der Bandkopf, sodann das Filetstück und erst danach der Bandfuß des jeweiligen Metallbandes zugeführt werden.

Die vorliegende Erfindung geht weiterhin aus von einer Gruppe von zwei Metallbändern,
- wobei die Metallbänder jeweils zwei Seitenkanten aufweisen, die in einer für die Metallbänder gemeinsamen Transportrichtung verlaufen,
- wobei die Metallbänder einen jeweiligen Bandkopf, einen jeweiligen Bandfuß sowie zwischen dem jeweiligen Bandkopf und dem jeweiligen Bandfuß ein jeweiliges Filetstück aufweisen,
- wobei der jeweilige Bandkopf eine jeweilige Vorderkante und der jeweilige Bandfuß eine jeweilige Hinterkante aufweist,
- wobei die Vorderkante des einen Metallbandes mit der Hinterkante des anderen Metallbandes über eine Schweißnaht verbunden ist,
- wobei die Schweißnaht sich quer zur Transportrichtung gesehen von einer Seitenkante des einen Metallbandes zur anderen Seitenkante desselben Metallbandes oder zu einer Seitenkante des anderen Metallbandes erstreckt.

Das Metallband kann insbesondere aus Stahl oder Aluminium bestehen. Es sind aber auch andere Metalle und Legierungen möglich. Die Bearbeitungseinrichtung kann eine Beize, einen Streckrichter oder ein Walzwerk umfassen, insbesondere ein Kaltwalzwerk. Auch mehrere dieser Komponenten können vorhanden sein, insbesondere sogar alle Komponenten. Wenn mehrere Komponenten vorhanden sind, werden diese von den Metallbändern sequenziell nacheinander durchlaufen.

Es ist möglich, dass das jeweilige Metallband dem Bandspeicher von einem Abhaspel zugeführt wird. In diesem Fall wird das jeweilige Metallband als Coil in den Abhaspel eingesetzt und sodann abgehaspelt. Gegebenenfalls kann zwischen dem Abhaspel und der Schweißmaschine ein weiterer Bandspeicher angeordnet sein. Weder der Abhaspel noch der weitere Bandspeicher sind aber zwingend erforderlich.

### Stand der Technik

in vielen Fällen werden Bearbeitungseinrichtungen für Metallbänder kontinuierlich betrieben. Kontinuierlicher Betrieb bedeutet in diesem Zusammenhang, dass der jeweiligen Bearbeitungseinrichtung ein Endlosband zugeführt wird, so dass die Komponenten der Bearbeitungseinrichtung jeweils permanent einen Abschnitt des Endlosbandes bearbeiten. Derartige Betriebsweisen sind beispielsweise für Beizen, Streckrichter und Walzwerke (insbesondere Kaltwalzwerke) bekannt. Zur Erzeugung des Endlosbandes werden vielfach einzelne, diskrete Metallbänder aneinander gesetzt, also der Bandkopf eines Metallbandes an den Bandfuß des vorhergehenden Metallbandes angesetzt. Die Metallbänder können aus demselben Material (beispielsweise einem Stahl mit einer für die Metallbänder einheitlichen chemischen Zusammensetzung) oder aus voneinander verschiedenen Materialien bestehen (beispielsweise Stählen mit voneinander verschiedenen chemischen Zusammensetzungen) bestehen. Auch die Abmessungen, also die Bandbreiten und die Banddicken, können gleich oder voneinander verschieden sein.

Das Verbinden der Metallbänder miteinander erfolgt über eine jeweilige Schweißnaht, die mittels einer Schweißmaschine erzeugt wird. Während des Schweißvorgangs werden der entsprechende Bandkopf und der entsprechende Bandfuß nicht gefördert. Aus diesem Grund ist zwischen der Schweißmaschine und der Bearbeitungseinrichtung ein Bandspeicher angeordnet. In dem Bandspeicher kann eine variable Länge des Endlosbandes gespeichert und gepuffert werden. Insbesondere kann die Geschwindigkeit, mit welcher das Endlosband aus dem Bandspeicher ausläuft, unabhängig von der Geschwindigkeit eingestellt werden, mit der das Endlosband in den Bandspeicher einläuft. Unterscheiden sich die Geschwindigkeiten, ändert sich selbstverständlich der Füllgrad des Speichers. Über längere Zeiträume betrachtet müssen die Einlaufgeschwindigkeit und die Auslaufgeschwindigkeit daher im Mittel gleich sein, da anderenfalls der Bandspeicher entweder leerlaufen oder überlaufen würde. Kurzzeitige Unterschiede in den Geschwindigkeiten können jedoch durch den Bandspeicher ausgeglichen werden.

Die entsprechenden Ausgestaltungen der Bearbeitungseinrichtung, der Schweißmaschine und des Bandspeichers und auch ihre Betriebsweisen sind Fachleuten allgemein bekannt.

Im Rahmen des Durchlaufs des Endlosbandes durch die Bearbeitungseinrichtung durchlaufen auch die Schweißnähte die Bearbeitungseinrichtung. Die Schweißnähte stellen oftmals Schwachstellen des Endlosbandes dar. Bei Streckrichtern besteht beispielsweise die Gefahr, dass das Endlosband bricht, während eine Schweißnaht den Streckrichter durchläuft. In noch größerem Umfang besteht bei Walzgerüsten die Gefahr, dass das Endlosband reisst, während eine Schweißnaht den Walzspalt des entsprechenden Walzgerüsts durchläuft. Durch ein Herstellen von qualitativ hochwertigen Schweißnähten kann diese Gefahr zwar reduziert werden. Es sind jedoch ein hohes Maß an Prozess-Know-how und eine qualitativ hochwertige Wartung der Schweißmaschine erforderlich. Insbesondere am Ende eines Produktionszyklus (beispielsweise vor einem Wartungsstillstand) kann diese Qualität nicht immer in vollem Umfang aufrechterhalten werden. Weiterhin sollen oftmals Materialien miteinander geschweißt werden, die nur schwer miteinander schweißbar sind. Bei derartigen Materialien besteht ein besonders hohes Risiko eines Bandrisses.

Um das Risiko eines Bandrisses im Bereich der Schweißnähte zu minimieren, werden insbesondere bei Walzwerken die Übergangsabschnitte vom einen zum anderen Metallband, also die jeweilige Schweißnaht und die Bereiche ein Stück davor und ein Stück dahinter, auf spezielle Art und Weise gewalzt, beispielsweise mit geringeren Walzkräften und geringeren Stichabnahmen. Aufgrund der anderen Art und Weise der Walzung weisen die Übergangsabschnitte jedoch andere Eigenschaften auf als die übrigen Bereiche der Metallbänder. Dies kann sowohl geometrische Eigenschaften (beispielsweise die Banddicke) als auch mechanische Eigenschaften (beispielsweise die Zugfestigkeit, die Dehngrenze und die Streckgrenze) betreffen. Die entsprechenden Übergangsabschnitte können daher oftmals nicht verwertet werden, sondern stellen Ausschuss dar.

### Zusammenfassung der Erfindung

Die Aufgabe der vorliegenden Erfindung besteht darin, Möglichkeiten zu schaffen, mittels derer die Gefahr eines Bandrisses minimiert werden kann und dennoch insbesondere bei Walzvorgängen der anfallende Ausschuss so gering wie möglich gehalten werden kann.

Die Aufgabe wird durch ein Bearbeitungsverfahren für Metallbänder mit den Merkmalen des Anspruchs 1 gelöst. Eine vorteilhafte Ausgestaltung des Bearbeitungsverfahrens ist Gegenstand der abhängigen Ansprüche 2 und 3.

Erfindungsgemäß wird ein Bearbeitungsverfahren der eingangs genannten Art dadurch ausgestaltet, dass die Schweißmaschine derart betrieben wird, dass ein Winkel, den die jeweilige Schweißnaht mit der Transportrichtung bildet, zumindest abschnittweise von 90° verschieden ist.

Dadurch läuft die jeweilige Schweißnaht nicht mehr zum selben Zeitpunkt über ihre gesamte Breite in die Bearbeitungseinrichtung ein und wird dort zum selben Zeitpunkt der Bearbeitung unterzogen, sondern verschiedene Abschnitte der jeweiligen Schweißnaht laufen zeitlich nacheinander in die Bearbeitungseinrichtung ein und werden dort nacheinander der Bearbeitung unterzogen. Zu jedem Zeitpunkt ist daher jeweils nur ein Teil der jeweiligen Schweißnaht der Beanspruchung durch den Bearbeitungsvorgang unterzogen. Beispielsweise bei einer Walzvorgang wird zu jedem Zeitpunkt nur der entsprechende Teil der jeweiligen Schweißnaht verformt. Der zu einem bestimmten Zeitpunkt der Bearbeitung unterzogene Abschnitt der jeweiligen Schweißnaht ist somit auf mindestens einer Seite, in der Regel sogar auf beiden Seiten, von dem Material des einen oder des anderen Metallbandes flankiert. Belastungen können daher von dem einen und/oder dem anderen Metallband aufgenommen werden. Nur ein geringer Teil der Belastung wirkt unmittelbar auf die jeweilige Schweißnaht. Der Linienstress auf die jeweilige Schweißnaht kann damit deutlich verringert werden. Weiterhin kann das Ausmaß kurzzeitiger Störungen, die durch das Bearbeiten der jeweiligen Schweißnaht erzeugt werden, aufgrund der zeitlichen Streckung bei der Bearbeitung der jeweiligen Schweißnaht deutlich reduziert werden. Die Stabilität des Bearbeitungsvorgangs kann dadurch erhöht werden.

Die jeweilige Vorderkante wird zum Schweißen mit dem Ende des vorhergehenden Metallbandes vorbereitet. Dies kann insbesondere durch eine Aufbereitung des Verlaufs der jeweiligen Vorderkante erfolgen, so dass der Verlauf der jeweiligen Vorderkante mit dem Verlauf der Hinterkante des jeweils vorhergehenden Metallbandes korrespondiert. Dieser Verlauf korrespondiert mit dem späteren Verlauf der jeweiligen Schweißnaht. Das Vorbereiten kann beispielsweise ein Schopfen mittels einer Schere sein. In analoger Weise kann auch der Bandfuß aufbereitet werden. In vielen Fällen erfolgt das Vorbereiten mittels eines Lasers, der am Bandkopf ein kleines Stück des jeweiligen Metallbandes abtrennt, so dass die durch diese Bearbeitung gebildete vordere Kante die Vorderkante des jeweiligen Metallbandes ist. In analoger Weise wird auch die Hinterkante des jeweils unmittelbar vorhergehenden Metallbandes vorbereitet. In der Regel werden unmittelbar vor dem Schweißen die beiden beteiligten Metallbänder aufeinander zu gefahren, so dass sie vollständig oder zumindest fast aneinander anstoßen. Werden des Schweißvorgangs selbst werden der Bandkopf des einen und der Bandfuß des anderen Metallbandes in der Schweißmaschine fixiert gehalten, beispielsweise geklemmt.

Die Schweißmaschine kann beispielsweise derart betrieben werden, dass die jeweilige Schweißnaht in einer Draufsicht eine Diagonale, eine V-Form, eine U-Form, eine N-Form, eine M- oder W-Form, eine S-Form, eine Parabel, eine Zickzackform oder eine Wellenform ausbildet.

Eine Diagonale kann gegebenenfalls auch leicht geschwungen sein. Entscheidend ist, dass die jeweilige Schweißnaht von der einen Seitenkante zur anderen Seitenkante gesehen eine einheitliche Steigung in Transportrichtung aufweist, also eine Steigung, die nicht oder nur geringfügig variiert und vor allem ihr Vorzeichen nicht wechselt. Eine V-Form und eine U-Form sind selbsterklärend. Bei einer N-Form und einer M- oder W-Form verlaufen die einzelnen Abschnitte der jeweiligen Schweißnaht gerade. Sie sind jedoch in aller Regel alle weder parallel zur Transportrichtung noch orthogonal dazu. Eine S-Form liegt vor, wenn die jeweilige Schweißnaht genau zwei gegenläufig geschwungene Abschnitte aufweist, beispielsweise zwei Halbkreise oder eine vollständige Periode einer Sinusschwingung. Mit einer Parabel ist eine Funktion 2. Grades gemeint. Eine Zickzackform ist eine Fortentwicklung einer N-Form und einer M- oder W-Form. Die einzelnen Abschnitte der jeweiligen Schweißnaht verlaufen also gerade, die Anzahl an Abschnitten ist aber größer als vier. In ähnlicher Weise ist eine Wellenform eine Fortentwicklung einer S-Form. Die einzelnen Abschnitte der jeweiligen Schweißnaht verlaufen also geschwungen, die Anzahl an Abschnitten ist aber größer als zwei.

In vielen Fällen ist die Bearbeitungseinrichtung als Walzwerk mit mindestens einem Walzgerüst ausgebildet. In diesem Fall werden die Metallbänder in den Walzgerüsten der Bearbeitungseinrichtung mit einer jeweiligen gedrückten Länge gewalzt. Der Begriff "gedrückte Länge" ist Fachleuten allgemein bekannt. Er bezeichnet in Transportrichtung gesehen denjenigen Bereich, in dem das jeweilige Metallband bei dem jeweiligen Walzvorgang von seiner Dicke einlaufseitig des jeweiligen Walzgerüsts auf seine Dicke auslaufseitig des jeweiligen Walzgerüsts gewalzt wird. Eine Längserstreckung, welche die jeweilige Schweißnaht in Transportrichtung gesehen vor dem Walzen in dem jeweiligen Walzgerüst aufweist, ist vorzugsweise größer als die jeweilige gedrückte Länge. Insbesondere dadurch wird erreicht, dass beim Walzen der jeweiligen Schweißnaht zu keinem Zeitpunkt die vollständige Schweißnaht dem jeweiligen Walzvorgang unterzogen wird.

In der Regel ist die gedrückte Länge beim ersten Walzvorgang größer oder zumindest nicht kleiner als die gedrückte Länge bei den anderen Walzvorgängen. Durch das Walzen der Metallbänder verlängert sich weiterhin bei jedem Walzvorgang die Längserstreckung der jeweiligen Schweißnaht. Sofern die Längserstreckung der jeweiligen Schweißnaht in Transportrichtung gesehen vor dem Walzen in dem ersten Walzgerüst größer als die jeweilige gedrückte Länge beim Walzen in dem ersten Walzgerüst, gilt dies daher zwangsläufig auch für die anderen Walzvorgängen. Selbst wenn dies jedoch nicht der Fall ist, wenn also ausnahmsweise beispielsweise die gedrückte Länge beim dritten Walzvorgang größer als die gedrückte Länge beim ersten Walzvorgang ist, ist dies in aller Regel unkritisch. Dies wird nachfolgend anhand eines Beispiels erläutert, bei dem angenommen wird, dass die Bearbeitungseinrichtung als Walzstraße mit beispielsweise vier Walzgerüsten ausgebildet ist. Denn auch wenn in einem derartigen Fall wird die Längserstreckung der jeweiligen Schweißnaht unmittelbar nach dem Herstellen der Schweißnaht kleiner als die gedrückte Länge ist, mit der die Metallbänder beispielsweise im zweiten Walzgerüst gewalzt wird, muss lediglich durch die Längung des Metallbandes durch das Walzen im ersten Walzgerüst gewährleistet sein, dass die Längserstreckung der jeweiligen Schweißnaht entsprechend vergrößert wird. Analoge Sachverhalte gelten für das Walzen im dritten und vierten bzw. allgemein jedem weiteren Walzgerüst.

Die Aufgabe wird weiterhin durch eine Bearbeitungsanlage für Metallbänder mit den Merkmalen des Anspruchs 4 gelöst. Eine vorteilhafte Ausgestaltung der Bearbeitungsanlage ist Gegenstand der abhängigen Ansprüche 5 und 6.

Erfindungsgemäß wird eine Bearbeitungsanlage der eingangs genannten Art dadurch ausgestaltet, dass die Schweißmaschine derart ausgebildet ist, dass ein Winkel, den die jeweilige Schweißnaht mit der Transportrichtung bildet, zumindest abschnittweise von 90° verschieden ist.

Der Begriff "Ausbildung der Schweißmaschine" im Sinne der vorliegenden Erfindung ist umfassend zu verstehen. Er kann eine Hardware-Ausbildung der Schweißmaschine als solche bedeuten, beispielsweise dass die Schweißmaschine einen Schweißlaser aufweist, der quer zur Transportrichtung verfahrbar ist und der beim Verfahren quer zur Transportrichtung beispielsweise durch eine Kulissenführung auch in Transportrichtung und entgegen der Transportrichtung verfahren wird. Auch ist es möglich, dass die Schweißmaschine als solche unverändert ist, aber die Steuereinrichtung der Schweißmaschine durch ihre Programmierung oder dergleichen so ausgebildet wird, dass die Schweißmaschine erfindungsgemäß wirkt. In diesem Fall bewirkt die Programmierung der Steuereinrichtung die entsprechende Ausbildung der Schweißmaschine. Beispielsweise ist es möglich, dass der Schweißlaser - wie im Stand der Technik auch - zwar ausschließlich quer zur Transportrichtung verfahren wird, während des Verfahrens quer zur Transportrichtung aber die beiden beteiligten Metallbänder in gewissem Umfang auch in Transportrichtung und entgegen der Transportrichtung verfahren werden. Auch ist es möglich, den Bandkopf und den Bandfuß vor dem Schweißen leicht zu verdrehen und nach dem Schweißen wieder zurück zu verdrehen, so dass die Schweißnaht zwar beim Schweißen als solchem ausschließlich quer zur Transportrichtung verläuft, nach dem Verdrehen der dann miteinander geschweißten Metallbänder zurück aber diagonal. Die durch die erfindungsgemäße Ausbildung der Schweißmaschine erzielbaren Vorteile korrespondieren mit denen des Bearbeitungsverfahrens.

Vorzugsweise ist die Schweißmaschine derart ausgebildet, dass die jeweilige Schweißnaht in einer Draufsicht eine Diagonale, eine V-Form, eine U-Form, eine N-Form, eine M- oder W-Form, eine S-Form, eine Parabel, eine Zickzackform oder eine Wellenform ausbildet. Die obigen Ausführungen zum Bearbeitungsverfahren sind in analoger Weise gültig.

Vorzugsweise ist die Bearbeitungseinrichtung als Walzwerk mit mindestens einem Walzgerüst ausgebildet.

Die Aufgabe wird weiterhin durch eine Gruppe von zwei Metallbändern mit den Merkmalen des Anspruchs 7 gelöst. Eine vorteilhafte Ausgestaltung der Gruppe von Metallbändern ist Gegenstand des abhängigen Anspruchs 8.

Erfindungsgemäß wird eine Gruppe von zwei Metallbändern der eingangs genannten Art dadurch ausgestaltet, dass ein Winkel, den die Schweißnaht mit der Transportrichtung bildet, zumindest abschnittweise von 90° verschieden ist. Die durch die entsprechende Ausbildung der Gruppe von Metallbändern erzielbaren Vorteile korrespondieren mit denen des Bearbeitungsverfahrens.

Vorzugsweise bildet die Schweißnaht in einer Draufsicht eine Diagonale, eine V-Form, eine U-Form, eine N-Form, eine M- oder W-Form, eine S-Form, eine Parabel, eine Zickzackform oder eine Wellenform aus. Die obigen Ausführungen zum Bearbeitungsverfahren sind in analoger Weise gültig.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Metallband,
- FIG 2 bis 5: eine Bearbeitungsanlage für Metallbänder in verschiedenen, zeitlich aufeinanderfolgenden Betriebszuständen,
- FIG 6 bis 9: Draufsichten auf Schweißnähte und
- FIG 10: eine Draufsicht auf zwei Metallbänder vor dem Schweißen.

### Beschreibung der Ausführungsformen

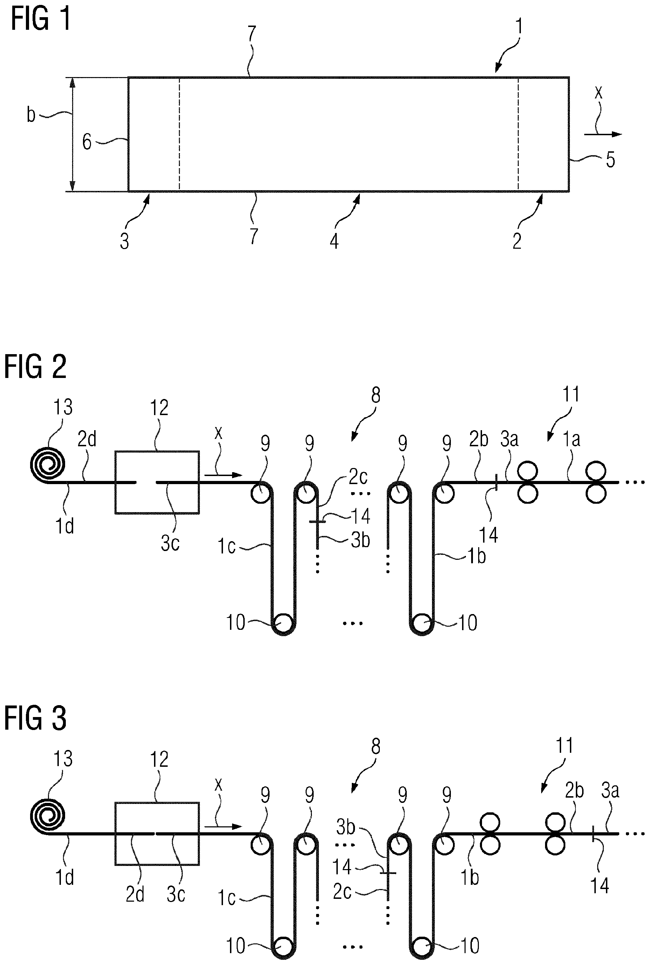

Metallbänder 1 sind gemäß FIG 1 langgestreckte flache Walzgüter. Die Metallbänder 1 werden - siehe hierzu später auch die weiteren FIG - in einer Transportrichtung x gefördert. Der vordere Bereich des jeweiligen Metallbandes 1 bildet den sogenannten Bandkopf 2, der hintere Bereich den sogenannten Bandfuß 3. Dazwischen befindet sich ein Mittelbereich des jeweiligen Metallbandes 1, das sogenannte Filetstück 4. Die genauen Grenzen vom Bandkopf 2 zum Filetstück 4 und vom Filetstück 4 zum Bandfuß 3 - in FIG 1 durch gestrichelte Linien angedeutet - sind von untergeordneter Bedeutung. Der jeweilige Bandkopf 2 endet an einer jeweiligen Vorderkante 5, der jeweilige Bandfuß 3 an einer jeweiligen Hinterkante 6. Zwischen der jeweiligen Vorderkante 5 und der jeweiligen Hinterkante 6 erstrecken sich jeweilige Seitenkanten 7 des Metallbandes 1. Die Seitenkanten 7 verlaufen parallel zur Transportrichtung x.

Die Metallbänder 1 sind in den weiteren FIG durch einen kleinen Buchstaben a, b usw. ergänzt, um sie im Rahmen der Beschreibung der vorliegenden Erfindung bei Bedarf voneinander unterscheiden zu können. Gleiches gilt für die verschiedenen Teile und Abschnitte der Metallbänder 1, beispielsweise die Bandköpfe 2 und die Bandfüße 3.

Gemäß FIG 2 weist eine Bearbeitungsanlage für die Metallbänder 1 einen Bandspeicher 8 auf. Der Bandspeicher 8 kann beispielsweise entsprechend der Darstellung in FIG 2 eine Anzahl von oberen Rollen 9 und unteren Rollen 10 aufweisen, wobei die Metallbänder 1 im Bandspeicher 8 abwechselnd über eine der oberen Rollen 9 und eine der unteren Rollen 10 geführt werden. Die oberen Rollen 9 können beispielsweise fest angeordnet sein, während die unteren Rollen 10 gegenüber den oberen Rollen 9 abgesenkt werden können. Je nach Ausmaß, in dem die unteren Rollen 10 abgesenkt sind, variiert die Menge an Metallband 1, die in dem Bandspeicher 2 gespeichert ist.

Die Bearbeitungsanlage weist weiterhin eine Bearbeitungseinrichtung 11 auf. Die Bearbeitungseinrichtung 11 kann beispielsweise entsprechend der Darstellung in FIG 1 als mehrgerüstige Walzstraße ausgebildet sein. In diesem Fall erfolgt in der Walzstraße in der Regel ein Kaltwalzen. Es sind aber auch andere Ausgestaltungen der Bearbeitungseinrichtung 11 möglich, sei es zusätzlich oder alternativ zu einer Walzstraße. Beispielsweise kann die Bearbeitungseinrichtung 11 eine Beize sein oder zusätzlich zur Walzstraße eine Beize umfassen. Im letztgenannten Fall ist Beize der Walzstraße vorgeordnet. Unabhängig von ihrer konkreten Ausgestaltung ist die Bearbeitungseinrichtung 11 jedoch dem Bandspeicher 8 nachgeordnet.

Schließlich weist die Bearbeitungsanlage eine Schweißmaschine 12 auf. Die Schweißmaschine 12 ist dem Bandspeicher 8 vorgeordnet.

Die Bearbeitungsanlage wird wie folgt betrieben:
Zu einem bestimmten Zeitpunkt ist im Bandspeicher 8 eine bestimmte Menge an Metallband 1 gespeichert. Beispielsweise sind in dem Zustand gemäß FIG 2 mit Ausnahme von dessen Bandfuß 3c das Metallband 1c und der Bandfuß 3b und ein Großteil des Filetstücks 4b des Metallbandes 1b gespeichert. Der Bandkopf 2b des Metallbandes 1b und das Metallband 1a haben den Bandspeicher 8 bereits verlassen. Konkret befindet sich der Bandkopf 2b des Metallbandes 1b noch auf dem Transport zur Bearbeitungseinrichtung 11, während das Metallband 1a sich bereits in der Bearbeitungseinrichtung 11 befindet oder die Bearbeitungseinrichtung 11 sogar schon wieder verlassen hat.

Der Bandfuß 3c des Metallbandes 1c befindet sich noch in der Schweißmaschine 12. An den Bandfuß 3c des Metallbandes 1c soll das Metallband 1d mit seinem Bandkopf 2d angesetzt werden. Zu diesem Zweck wird der Bandkopf 2b des Metallbandes 1d der Schweißmaschine 12 zugeführt. In der Regel wird zu diesem Zweck das Metallband 1d im entsprechenden Ausmaß von einem Haspel 13 abgehaspelt. Konkret erfolgt das Abhaspeln so weit, dass der Bandkopf 2d des Metallbandes 1d innerhalb der Schweißmaschine 12 in die unmittelbare Nähe des Bandfußes 2c des Metallbandes 1c gefahren wird. Die Vorderkante 5d des Metallbandes 1d grenzt somit entsprechend der Darstellung in FIG 3 mit äußerst geringem Abstand (maximal wenige Millimeter) an die Hinterkante 6c des Metallbandes 1c an.

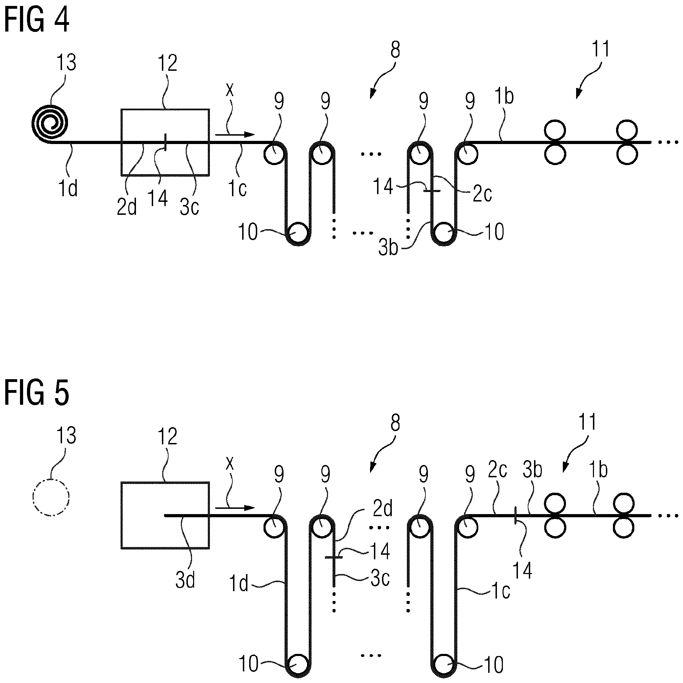

In diesem Zustand wird mittels der Schweißmaschine 12 die Vorderkante 5d des Metallbandes 1d an die Hinterkante 6c des Metallbandes 1c angeschweißt. Zwischen diesen beiden Kanten 5d, 6c bildet sich somit eine Schweißnaht 14. Durch das Schweißen ist das Metallband 1d Bestandteil eines Endlosbandes geworden, das zuvor nur die Metallbänder 1a, 1b und 1c umfasste. FIG 4 zeigt diesen Zustand. Nach dem Anschweißen werden der Bandfuß 3c des Metallbandes 1c sowie der Bandkopf 2d und das Filetstück 4d des Metallbandes 1d dem Bandspeicher 8 in der Transportrichtung x zugeführt. Das Zuführen des Metallbandes 1d erfolgt so weit, dass der Bandfuß 3d noch in der Schweißmaschine 12 verbleibt. FIG 5 zeigt den entsprechenden Zustand.

Soweit es das Zuführen der Metallbänder 1 zum Bandspeicher 8 betrifft, ist mit der obenstehend erläuterten Vorgehensweise ein vollständiger Zyklus abgeschlossen. Dieser Zyklus wird immer wieder wiederholt, so dass also immer wieder ein neues Metallband 1 an das vorherige Metallband 1 angeschweißt wird und dem Bandspeicher 8 zugeführt wird. Im Ergebnis werden dem Bandspeicher 8 somit die Metallbänder 1 intermittierend und sequenziell nacheinander zugeführt. Weiterhin - dies ergibt sich ganz von selbst - ist die Transportrichtung x für die Metallbänder 1 einheitlich und läuft jedes Metallband 1 zuerst mit seinem Bandkopf 2, dann mit seinem Filetstück 4 und schließlich mit seinem Bandfuß 3 in den Bandspeicher 8 ein.

Das Zuführen der im Bandspeicher 8 gespeicherten Metallbänder 1 (bzw. der entsprechenden Abschnitte des Endlosbandes) zur Bearbeitungseinrichtung 11 kann nach Bedarf erfolgen. Es ist im Einzelfall möglich, dass das Zuführen intermittierend erfolgt. In der Regel erfolgt es jedoch kontinuierlich. Auch dies ist aus den FIG 2 bis 5 ersichtlich.

Insbesondere befinden sich die Schweißnähte 14 zwischen den Metallbändern 1a und 1b sowie den Metallbändern 1b und 1c in dem Zustand gemäß FIG 2 an bestimmten Stellen und befinden sich weiterhin die unteren Rollen 10 auf einem bestimmten Höhenniveau, welches wiederum mit dem Füllgrad des Bandspeichers 8 korrespondiert. Bis zum Heranführen des Bandkopfes 2d des Metallbandes 1d an den Bandfuß 3c des Metallbandes 1c - dargestellt in FIG 3 - vergeht eine Zeitspanne. Auch während dieser Zeitspanne erfolgen in der Regel ein Ausfördern des Endlosbandes aus dem Bandspeicher 8 und hiermit verbunden ein Zuführen des Endlosbandes zur Bearbeitungseinrichtung 11. Gegenüber dem in FIG 2 dargestellten Zustand hat sich der Ort des Bandfußes 3c aber nicht geändert. Durch das Ausfördern des Endlosbandes aus dem Bandspeicher 8 hat sich somit der Füllgrad des Bandspeichers 8 verringert. Hiermit korrespondierend sind die unteren Rollen 10 gegenüber dem Zustand von FIG 2 angehoben. Weiterhin haben sich die Orte geändert, an denen sich die Schweißnähte 14 zwischen den Metallbändern 1a und 1b sowie den Metallbändern 1b und 1c befinden.

In ähnlicher Weise wird auch zum Bilden der Schweißnaht 14 zwischen den Metallbändern 1c und 1d - dargestellt in FIG 4 - eine Zeitspanne benötigt. Auch während dieser Zeitspanne erfolgen ein Ausfördern des Endlosbandes aus dem Bandspeicher 8 und hiermit verbunden ein Zuführen des Endlosbandes zur Bearbeitungseinrichtung 11. Gegenüber dem in FIG 3 dargestellten Zustand hat sich der Ort des Bandfußes 3c nach wie vor nicht geändert. Durch das Ausfördern des Endlosbandes aus dem Bandspeicher 8 hat sich jedoch der Füllgrad des Bandspeichers 8 noch weiter verringert. Hiermit korrespondierend sind die unteren Rollen 10 gegenüber dem Zustand von FIG 2 noch weiter angehoben. Auch haben sich gegenüber dem Zustand in FIG 3 wieder die Orte geändert, an denen sich die Schweißnähte 14 zwischen den Metallbändern 1a und 1b sowie den Metallbändern 1b und 1c befinden.

Auch für das Zuführen des Bandfußes 3c des Metallbandes 1c sowie des Bandkopfes 2d und des Filetstücks 4d des Metallbandes 1d zum Bandspeicher 8 wird eine bestimmte Zeitspanne benötigt. Es haben sich daher wieder die Orte geändert, an denen sich die Schweißnähte 14 zwischen den Metallbändern 1a und 1b sowie den Metallbändern 1b und 1c befinden. Das Zuführen des Bandfußes 3c des Metallbandes 1c sowie des Bandkopfes 2d und des Filetstücks 4d des Metallbandes 1d zum Bandspeicher 8 erfolgt jedoch mit einer höheren Geschwindigkeit als das Ausfördern des Endlosbandes aus dem Bandspeicher 8. Durch das Zuführen des Bandfußes 3c des Metallbandes 1c sowie des Bandkopfes 2d und des Filetstücks 4d des Metallbandes 1d zum Bandspeicher 8 wird somit trotz des gleichzeitigen Ausförderns des Endlosbandes aus dem Bandspeicher 8 der Füllgrad des Bandspeichers 8 erhöht. Hiermit korrespondierend sind die unteren Rollen 10 gegenüber dem Zustand von FIG 4 abgesenkt, in der Regel auf das gleiche oder zumindest ein ähnliches Niveau wie bei FIG 2.

Analog zum Zuführen der Metallbänder 1 zum Bandspeicher 8 - dies ergibt sich ganz von selbst - wird ersichtlich jedes Metallband 1 zuerst mit seinem Bandkopf 2, dann mit seinem Filetstück 4 und schließlich mit seinem Bandfuß 3 der Bearbeitungseinrichtung 11 zugeführt.

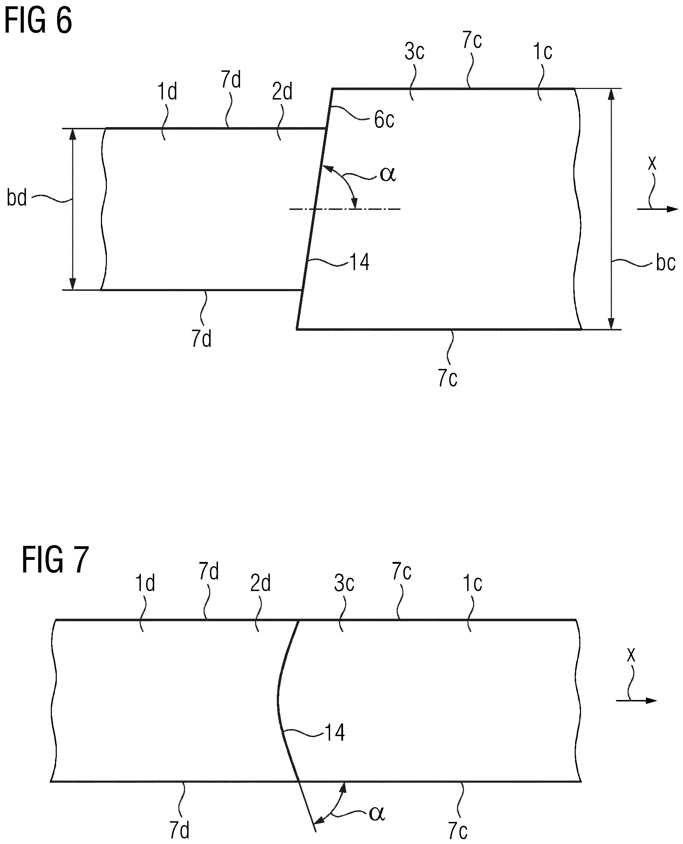

Nachfolgend werden in Verbindung mit den FIG 6 bis 9 mögliche Ausgestaltungen der Schweißnaht 14 zwischen den Metallbändern 1c und 1d erläutert. Die entsprechenden Ausführungen sind jedoch 1:1 auch auf die Schweißnähte 14 zwischen anderen Metallbändern 1 übertragbar.

In der Regel werden die Metallbänder 1c, 1d gemäß den FIG 6 bis 9 mittig aneinander angesetzt. In diesem Fall erstreckt sich die Schweißnaht 14 unabhängig davon, ob die Metallbänder 1c, 1d dieselbe Bandbreite bc, bd oder voneinander verschiedene Bandbreiten bc, bd aufweisen, von der Seitenkante 7c, 7d eines der beiden Metallbänder 1c, 1d zur anderen Seitenkante 7c, 7d desselben Metallbandes 1c, 1d. Auch im Falle einer au-βermittigen Verbindung der Metallbänder 1c, 1d kann dieser Fall auftreten. Im Falle einer außermittigen Verbindung der Metallbänder 1c, 1d ist es jedoch möglich, dass sich die Schweißnaht 14 von der Seitenkante 7c, 7d eines der beiden Metallbänder 1c, 1d zu einer Seitenkante 7d, 7c des anderen Metallbandes 1d, 1c erstreckt. Unabhängig davon, ob der eine oder der andere Fall realisiert ist, ist jedoch ein Winkel a, den die Schweißnaht 14 mit der Transportrichtung x bildet, zumindest abschnittweise von 90° verschieden.

Bezogen auf die Erstreckung der Schweißnaht 14 quer zur Transportrichtung x ist der Winkel α vorzugsweise über mindestens 50 %, besonders bevorzugt über mindestens 70 % und insbesondere über mindestens 90 % von 90° verschieden. Wenn also beispielsweise entsprechend der Darstellung in FIG 6 das Metallband 1c eine Breite bc von 110 cm aufweist und das Metallband 1d eine Breite bd von 90 cm aufweist und sich die Schweißnaht 14 über die Breite bd des Metallbandes 1d erstreckt, so ist der Winkel α vorzugsweise über mindestens 45 cm, besonders bevorzugt über mindestens 63 cm und insbesondere über mindestens 81 cm von 90° verschieden. Für andere Bandbreiten b ergeben sich selbst verständlich andere Zahlenwerte. In jedem Fall ist die Schweißmaschine 12 derart ausgebildet, dass sie diese Schweißnaht 14 bilden kann, und wird auch so betrieben.

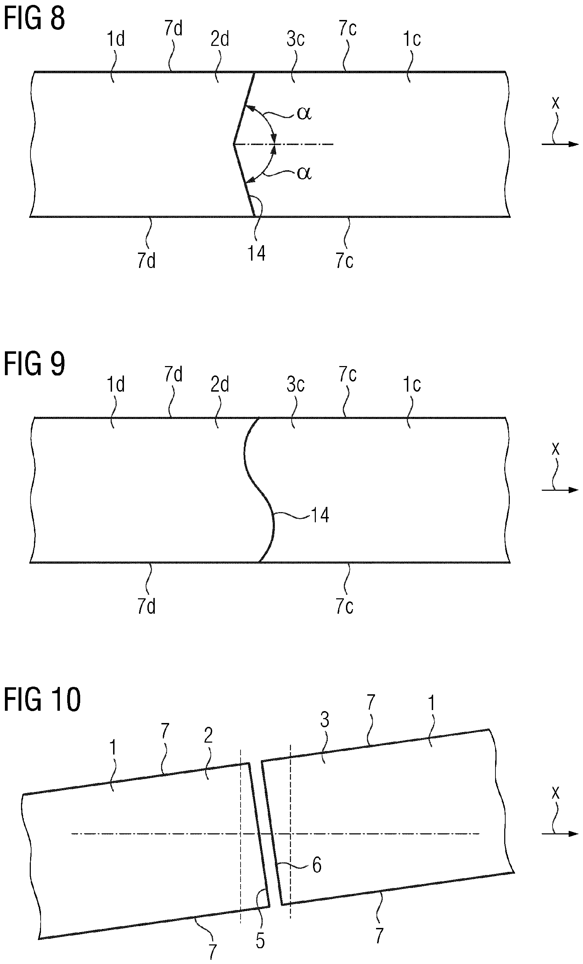

Das Ausmaß, um welches der Winkel α von 90° verschieden, kann nach Bedarf bestimmt sein. Im Falle einer Diagonale (FIG 6) kann die Abweichung von 90° bei ca. 5° bis 10° liegen, insbesondere zwischen 6° und 8°. Im Falle einer Parabel (also einer Funktion 2. Grades des Ortes in Breitenrichtung, FIG 7) sollte der Maximalwert der Abweichung von 90° bei ca. 5° bis 10° liegen, insbesondere zwischen 6° und 8°. Gleiches gilt auch für andere Verläufe der Schweißnaht 14, beispielsweise für eine V-Form (FIG 8) oder eine S-Form (Sinus, FIG 9, oder Teilkreise). Ebenso gilt dies vorzugsweise auch, wenn die Schweißnaht 14 eine andere Form aufweist, beispielsweise eine U-Form, eine N-Form, eine M- oder W-Form, eine Zickzackform oder eine Wellenform.

Der Schweißvorgang als solches und auch das Vorbereiten der Vorderkante 5 des einen Metallbandes 1 und der Hinterkante 6 des anderen Metallbandes 1 müssen nicht näher erläutert werden. Denn mögliche Ausgestaltungen hierfür sind für den Fachmann ohne weiteres realisierbar. Beispielsweise kann für beliebige Verläufe der jeweiligen Schweißnaht 14 durch entsprechend ausgestaltete Messer oder Scheren eine entsprechende Kontur der Vorderkante 5 des einen Metallbandes 1 und der Hinterkante 6 des anderen Metallbandes 1 generiert werden. Auch ist es möglich, die Vorderkante 5 des einen Metallbandes 1 und die Hinterkante 6 des anderen Metallbandes 1 mittels eines Lasers entsprechend zu bearbeiten. Der Laser kann beispielsweise durch eine Kulissenführung geführt werden.

Konkret für einen diagonalen Verlauf der Schweißnaht 14 ist es weiterhin möglich, durch Klemmen entsprechender Bereiche des Bandkopfes 2 des einen Metallbandes 1 und des Bandfußes 3 des anderen Metallbandes 1 und ein Bilden von Schlaufen zu erreichen, dass die Metallbänder 1 in der Schweißmaschine 12 unter dem Winkel α schräg verlaufen. FIG 10 zeigt diesen Zustand der Metallbänder 1. In diesem Zustand können sodann in völlig konventioneller Art und Weise die Vorderkante 5 des einen Metallbandes 1 und der Hinterkante 6 des anderen Metallbandes 1 vorbereitet werden. Das Abschneiden - angedeutet in FIG 10 durch gestrichelte Linien - kann in diesem Fall in ebenfalls völlig konventioneller Art und Weise orthogonal zur Transportrichtung x erfolgen. Auch das Schweißen kann in diesem Fall in ebenfalls völlig konventioneller Art und Weise orthogonal zur Transportrichtung x erfolgen. Aufgrund des Umstands, dass der Bandkopf 2 des einen Metallbandes 1 und des Bandfuß 3 des anderen Metallbandes 1 während des Schweißvorgangs unter dem Winkel α schräg verlaufen, sich nach dem Schweißen jedoch wieder in der Transportrichtung x ausrichten (siehe FIG 6), verläuft nach dem Schweißen die Schweißnaht 14 unter dem Winkel α.

Die vorliegende Erfindung weist viele Vorteile auf. Insbesondere wirkt die Bearbeitungseinrichtung 11 aufgrund des neuartigen Verlaufs der Schweißnähte 14 zu einem bestimmten Zeitpunkt nicht über die gesamte Breite der Schweißnähte 14 auf die Schweißnähte 14, sondern jeweils nur über einen Teilbereich. Dadurch wird zu jedem Zeitpunkt jeweils nur ein Teilbereich der jeweiligen Schweißnaht 14 der Bearbeitung unterzogen. Insbesondere in Streckrichtern und Walzwerken ist ein Variieren des Bearbeitungsprozesses für die Schweißnähte 14 nicht mehr erforderlich. Abmaßlängen, die als Ausschuss aussortiert werden müssen, können dadurch reduziert werden. Das Ausbringen kann somit erhöht werden. Das Risiko eines Bandrisses kann auf nahezu Null abgesenkt werden. Als weiterer positiver Effekt ergibt sich, dass Wartungsintervalle der Schweißmaschine 12 vergrößert werden können und sich auch Wartung der Schweißmaschine 12 vereinfacht. Stillstandzeiten der Bearbeitungsanlage können dadurch reduziert werden, was ebenfalls die Produktivität steigert. Weiterhin können auch konventionelle Schweißmaschinen 12 auf einfache Weise zumindest dahingehend nachgerüstet werden, dass sie einen diagonalen Verlauf der Schweißnaht 14 herstellen können.

Obwohl die Erfindung im Detail durch das bevorzugte Ausführungsbeispiel näher illustriert und beschrieben wurde, so ist die Erfindung nicht durch die offenbarten Beispiele eingeschränkt und andere Varianten können vom Fachmann hieraus abgeleitet werden, ohne den Schutzumfang der Erfindung zu verlassen.

### Bezugszeichenliste

- 1: Metallbänder
- 2: Bandköpfe
- 3: Bandfüße
- 4: Filetstücke
- 5: Vorderkanten
- 6: Hinterkanten
- 7: Seitenkanten
- 8: Bandspeicher
- 9: obere Rollen
- 10: untere Rollen
- 11: Bearbeitungseinrichtung
- 12: Schweißmaschine
- 13: Abhaspel
- 14: Schweißnähte

- b: Bandbreiten
- x: Transportrichtung

- α: Winkel

## Patentansprüche

1. Bearbeitungsverfahren für Metallbänder (1),
- wobei einem Bandspeicher (8) einer Bearbeitungsanlage für die Metallbänder (1) intermittierend und sequenziell nacheinander in einer für die Metallbänder (1) einheitlichen Transportrichtung (x) jeweils ein Metallband (1) zugeführt wird,
- wobei das jeweilige Metallband (1) einen jeweiligen Bandkopf (2), einen jeweiligen Bandfuß (3) sowie zwischen dem jeweiligen Bandkopf (2) und dem jeweiligen Bandfuß (3) ein jeweiliges Filetstück (4) aufweist,
- wobei das jeweilige Metallband (1) zuerst mit dem jeweiligen Bandkopf (2), sodann dem jeweiligen Filetstück (4) und schließlich dem jeweiligen Bandfuß (3) in den Bandspeicher (8) einläuft,
- wobei der jeweilige Bandkopf (2) eine jeweilige Vorderkante (5) und der jeweilige Bandfuß (3) eine jeweilige Hinterkante (6) aufweist,
- wobei die jeweilige Vorderkante (5) unmittelbar vor dem Zuführen des jeweiligen Metallbandes (1) zum Bandspeicher (8) mittels einer Schweißmaschine (12) der Bearbeitungsanlage an die Hinterkante (6) eines dem Bandspeicher (8) jeweils unmittelbar zuvor teilweise zugeführten Metallbandes (1) angeschweißt wird, so dass sich zwischen der Vorderkante (5) des jeweiligen Metallbandes (1) und der Hinterkante (6) des jeweils unmittelbar zuvor teilweise zugeführten Metallbandes (1) eine jeweilige Schweißnaht (14) bildet,
- wobei die jeweilige Schweißnaht (14) sich quer zur Transportrichtung (x) gesehen von einer in Transportrichtung (x) verlaufenden Seitenkante (7) eines der beiden beteiligten Metallbänder (1) zur anderen Seitenkante (7) desselben Metallbandes (1) oder zu einer Seitenkante (7) des anderen Metallbandes (1) erstreckt,
- wobei die im Bandspeicher (8) gespeicherten Metallbänder (1) einschließlich der die Metallbänder (1) verbindenden Schweißnähte (14) von dem Bandspeicher (8) kontinuierlich oder intermittierend einer Bearbeitungseinrichtung (11) der Bearbeitungsanlage zugeführt werden,
- wobei der Bearbeitungseinrichtung (11) jeweils zunächst der Bandkopf (2), sodann das Filetstück (4) und erst danach der Bandfuß (3) des jeweiligen Metallbandes (1) zugeführt werden,
**dadurch gekennzeichnet,**
**dass** die Schweißmaschine (12) derart betrieben wird, dass ein Winkel (α), den die jeweilige Schweißnaht (14) mit der Transportrichtung (x) bildet, zumindest abschnittweise von 90° verschieden ist.

2. Bearbeitungsverfahren nach Anspruch 1,
**dadurch gekennzeichnet,**
**dass** die Schweißmaschine (12) derart betrieben wird, dass die jeweilige Schweißnaht (14) in einer Draufsicht eine Diagonale, eine V-Form, eine U-Form, eine N-Form, eine M- oder W-Form, eine S-Form, eine Parabel, eine Zickzackform oder eine Wellenform ausbildet.

3. Bearbeitungsverfahren nach Anspruch 1 oder 2,
**dadurch gekennzeichnet,**
**dass** die Bearbeitungseinrichtung (11) als Walzwerk mit mindestens einem Walzgerüst ausgebildet ist, dass die Metallbänder (1) in den Walzgerüsten der Bearbeitungseinrichtung (11) mit einer jeweiligen gedrückten Länge gewalzt werden und dass eine Längserstreckung, welche die jeweilige Schweißnaht (14) in Transportrichtung (x) gesehen vor dem Walzen in dem jeweiligen Walzgerüst aufweist, größer als die jeweilige gedrückte Länge ist.

4. Bearbeitungsanlage für Metallbänder (1),
- wobei die Bearbeitungsanlage einen Bandspeicher (8) aufweist, dem intermittierend und sequenziell nacheinander in einer für die Metallbänder (1) einheitlichen Transportrichtung (x) jeweils ein Metallband (1) zugeführt wird,
- wobei das jeweilige Metallband (1) einen jeweiligen Bandkopf (2), einen jeweiligen Bandfuß (3) sowie zwischen dem jeweiligen Bandkopf (2) und dem jeweiligen Bandfuß (3) ein jeweiliges Filetstück (4) aufweist,
- wobei das jeweilige Metallband (1) zuerst mit dem jeweiligen Bandkopf (2), sodann dem jeweiligen Filetstück (4) und schließlich dem jeweiligen Bandfuß (3) in den Bandspeicher (8) einläuft,
- wobei der jeweilige Bandkopf (2) eine jeweilige Vorderkante (5) und der jeweilige Bandfuß (3) eine jeweilige Hinterkante (6) aufweist,
- wobei die Bearbeitungsanlage eine dem Bandspeicher (8) vorgeordnete Schweißmaschine (12) aufweist, mittels derer die Vorderkante (5) des jeweiligen Metallbandes (1) unmittelbar vor dem Zuführen des jeweiligen Metallbandes (1) zum Bandspeicher (8) an die Hinterkante (6) eines dem Bandspeicher (8) jeweils unmittelbar zuvor teilweise zugeführten Metallbandes (1) angeschweißt wird, so dass sich zwischen der Vorderkante (5) des jeweiligen Metallbandes (1) und der Hinterkante (6) des jeweils unmittelbar zuvor teilweise zugeführten Metallbandes (1) eine jeweilige Schweißnaht (14) bildet,
- wobei die jeweilige Schweißnaht (14) sich quer zur Transportrichtung (x) gesehen von einer in Transportrichtung (x) verlaufenden Seitenkante (7) eines der beiden beteiligten Metallbänder (1) zur anderen Seitenkante (7) desselben Metallbandes (1) oder zu einer Seitenkante (7) des anderen Metallbandes (1) erstreckt,
- wobei die im Bandspeicher (8) gespeicherten Metallbänder (1) einschließlich der die Metallbänder (1) verbindenden Schweißnähte (14) von dem Bandspeicher (8) kontinuierlich oder intermittierend einer Bearbeitungseinrichtung (11) der Bearbeitungsanlage zugeführt werden,
- wobei der Bearbeitungseinrichtung (11) jeweils zunächst der Bandkopf (2), sodann das Filetstück (4) und erst danach der Bandfuß (3) des jeweiligen Metallbandes (1) zugeführt werden,
**dadurch gekennzeichnet,**
**dass** die Schweißmaschine (12) derart ausgebildet ist, dass ein Winkel (α), den die jeweilige Schweißnaht (14) mit der Transportrichtung (x) bildet, zumindest abschnittweise von 90° verschieden ist.

5. Bearbeitungsanlage nach Anspruch 4,
**dadurch gekennzeichnet,**
**dass** die Schweißmaschine (12) derart ausgebildet ist, dass die jeweilige Schweißnaht (14) in einer Draufsicht eine Diagonale, eine V-Form, eine U-Form, eine N-Form, eine M- oder W-Form, eine S-Form, eine Parabel, eine Zickzackform oder eine Wellenform ausbildet.

6. Bearbeitungsanlage nach Anspruch 4 oder 5,
**dadurch gekennzeichnet,**
**dass** die Bearbeitungseinrichtung (11) als Walzwerk mit mindestens einem Walzgerüst ausgebildet ist.

7. Gruppe von zwei Metallbändern (1),
- wobei die Metallbänder (1) jeweils zwei Seitenkanten (7) aufweisen, die in einer für die Metallbänder (1) gemeinsamen Transportrichtung (x) verlaufen,
- wobei die Metallbänder (1) einen jeweiligen Bandkopf (2), einen jeweiligen Bandfuß (3) sowie zwischen dem jeweiligen Bandkopf (2) und dem jeweiligen Bandfuß (3) ein jeweiliges Filetstück (4) aufweisen,
- wobei der jeweilige Bandkopf (2) eine jeweilige Vorderkante (5) und der jeweilige Bandfuß (3) eine jeweilige Hinterkante (6) aufweist,
- wobei die Vorderkante (5) des einen Metallbandes (1) mit der Hinterkante (6) des anderen Metallbandes (1) über eine Schweißnaht (14) verbunden ist,
- wobei die Schweißnaht (14) sich quer zur Transportrichtung (x) gesehen von einer in Transportrichtung (x) verlaufenden Seitenkante (7) des einen Metallbandes (1) zur anderen Seitenkante (7) desselben Metallbandes (1) oder zu einer Seitenkante (7) des anderen Metallbandes (1) erstreckt,
**dadurch gekennzeichnet,**
**dass** ein Winkel (α), den die Schweißnaht (14) mit der Transportrichtung (x) bildet, zumindest abschnittweise von 90° verschieden ist.

8. Gruppe von Metallbändern nach Anspruch 7,
**dadurchg ekennzeichnet,**
dass die Schweißnaht (14) in einer Draufsicht eine Diagonale, eine V-Form, eine U-Form, eine N-Form, eine M- oder W-Form, eine S-Form, eine Parabel, eine Zickzackform oder eine Wellenform ausbildet.
